# EUROPÄISCHE PATENTSCHRIFT

(11) **EP 0 490 807 B1**
(45) Veröffentlichungstag und Bekanntmachung des Hinweises auf die Patenterteilung: **27.12.1995**
(21) Anmeldenummer: 91810806.9
(22) Anmeldetag: 18.10.1991
(51) Int. Cl.: B23K 35/32, C04B 37/02, G05D 16/00, B22D 11/06

(54) **Ternäres Aktivlot auf der Basis einer Zirconium/Nickel-Legierung**
Ternary brazing based on a Zirconium/Nickel alloy
Brasure active à trois composants à base d'un alliage Zirconium/Nickel

(30) Priorität: 13.11.1990 EP 90710031; 04.09.1991 DE 4129414
(43) Veröffentlichungstag der Anmeldung: 17.06.1992
(73) Patentinhaber: ENDRESS U. HAUSER GMBH U. CO., D-79689 Maulburg (DE)
(72) Erfinder: Hegner, Frank, Dr., W-7850 Lörrach (DE); Schmidt, Elke, Dipl.-Ing., W-7860 Schopfheim (DE); Klähn, Thomas, Dipl.-Ing., W-7800 Freiburg-Opfingen (DE); Reimann, Peter, El. Ing. HTL, CH-4446 Buckten BL (CH); Breitenstein, Heinz, CH-4112 Bättwil SO (CH); Messmer, Stephan, CH-4102 Binningen BL (CH)
(74) Vertreter: Morstadt, Volker, Dipl.-Ing.

(56) Entgegenhaltungen:
- EP-A- 0 038 584
- EP-A- 0 055 827
- EP-A- 0 332 978
- EP-A- 0 342 506
- US-A- 3 740 830
- US-A- 4 448 853
- PATENT ABSTRACTS OF JAPAN, Band 8, Nr. 218 (C-245)[1655], 4. Oktober 1984; & JP-A-59 116 350 (MASAAKI NAGA) 05-07-1984
- PATENT ABSTRACTS OF JAPAN, Band 13, Nr. 76 (M-800)[3424], 21. Februar 1989; & JP-A-63 273 592 (DAIDO STEEL CO., LTD) 10-11-1988

## Beschreibung

Die Erfindung beschäftigt sich mit der Schaffung eines ternären Aktivlots mit den Partnern Zirconium, Nickel und Titan.

Aktivlote sind Legierungen, die mindestens ein sauerstoffaffines Element, z.B. Titan, enthalten, so daß beim Löten keinerlei Flußmittel erforderlich sind.

Ternäre Aktivlote mit den Partnern Zirconium, Nickel und Titan eignen sich vorzugsweise zum Verlöten von ((Aluminium-)Oxid)Keramikteilen oder Einkristallen oder Metallteilen jeweils untereinander oder von ((Aluminium-) Oxid)Keramikteilen mit Einkristallen oder von ((Aluminium-) Oxid)Keramikteilen bzw. Einkristallen mit Metallteilen.

In der EP-A 332 978 ist eine aus dem Zweistoffsystem Zirconium/Nickel bestehende Lötfolie zum Hartlöten von Keramik mit Keramik, Keramik mit Metallen und Metallen untereinander beschrieben. Das Phasendiagramm des Systems Zirconium/Nickel ist in dem Standardwerk von M. Hansen, "Constitution of Binary Alloys", 2. Auflage, New York 1958, Seiten 1062/1063 beschrieben.

Von den Erfindern vorgenommene Versuche haben keine befriedigenden Eigenschaften der mit den vorbeschriebenen Lötfolien hergestellten Produkte ergeben, insb. wenn es sich dabei um Aluminiumoxid-Keramikteile handelte.

Bei der Untersuchung der dafür verantwortlichen Ursachen und der daraus resultierenden Verbesserungen haben die Erfinder nun jedoch überraschenderweise erkannt, daß Zirconium/Nickel-Legierungen sich dann besonders gut zum Verlöten oder Fügen von ((Aluminium-)Oxid)Keramikteilen oder Einkristallen oder Metallteilen jeweils untereinander oder von ((Aluminium-)Oxid)Keramikteilen mit Einkristallen oder von ((Aluminium-)Oxid)Keramikteilen bzw. Einkristallen mit Metallteilen eignen, wenn Titan zugegeben wird.

Dadurch läßt sich der thermische Ausdehnungskoeffizient dieser neuen Aktivlote an denjenigen der zu verlötenden Teile sehr gut anpassen, und es kann ein Optimum zwischen Benetzung, mechanischer Festigkeit und thermischer Ausdehnung im Lötbereich erzielt werden kann, so daß Verspannungen zwischen Aktivlotschicht und z.B. der Keramik bei empfindlichen Bauteilen minimiert oder ganz vermieden werden können.

Wie von den Erfindern festgestellt wurde, ist die mittels derartigen Aktivloten erzeugte Lötverbindung, die sogenannte Fügestelle, nicht nur hochvakuumdicht, sondern sie weist auch eine sehr hohe mechanische Festigkeit auf.

Das ternäre Aktivlot der Erfindung besteht daher entsprechend Anspruch 1 aus 70 Atom% bis 85 Atom% einer Zirconium/Nickel-Legierung, die aus 70 Atom% bis 85 Atom% Zirconium und 15 Atom% bis 30 Atom% Nickel besteht, und 15 Atom% bis 30 Atom% Titan. Bevorzugte Ausführungsformen des Aktivlotes sind Gegenstand der abhängigen Anspruche 2 und 3.

Dabei hat die Zirconium/Nickel-Legierung zweckmäßigerweise eine eutektikumsnahe Zusammensetzung, worunter ein Bereich um die eutektische Zusammensetzung (= 24 Atom% Nickel, 76 Atom% Zirconium) von ± 5 Atom% zu verstehen ist; insb. ist natürlich diese eutektische Zirconium/Nickel-Legierung selbst geeignet.

Das Verfahren gemäß Anspruch 4 zum Herstellen eines gleichmäßig dicken und zwei möglichst glatte Oberflächen aufweisenden Bandes aus dem ternären Aktivlot nach der Erfindung mittels des Melt-Spinning-Verfahrens benutzt einen vollständig aus hochwärmebeständigem, gut wärmeleitfähigem, hochdichtem Graphit oder aus hochwärmebeständigem, gut wärmeleitfähigem Bornitrid bestehenden zylindrischen Tiegel, in dem, z.B. mittels Hochfrequenzenergie, das ternäre Aktivlot schmelzflüssig gemacht und durch eine in dessen Bodenfläche angeordnete Tiegelöffnung hindurch auf eine mit hoher Umfangsgeschwindigkeit rotierende Metalltrommel hoher Wärmeleitfähigkeit ausgepreßt wird, auf der das flüssige Aktivlot mit einer Abkühlgeschwindigkeit in der Größenordnung von 10³ bis 10⁶ °C/s erstarrt. Weitere Ausgestaltungen des Verfahrens nach Anspruch 4 finden sich in den abhängigen Ansprüchen 5 bis 8.

Bevorzugt ist der Tiegel zweiteilig mit einem Oberteil und einem Unterteil, die Zweckmäßigerweise eine konstante Wandstärke haben und miteinander verschraubt sind.

Bevorzugt ist die Tiegelöffnung mittig in der Bodenfläche des Tiegels angeordnet und steht aus dieser hervor. Die Tiegelöffnung ist zweckmäßigerweise senkrecht über der Metalltrommel in Verlängerung ihres Durchmessers angeordnet.

Das Melt-Spinning-Verfahren dient zum Herstellen von Metallbändern, meist aus Legierungen, die, wenn sie auf andere Art und Weise als durch das Melt-Spinning-Verfahren hergestellt werden, spröde sind, durch es jedoch als duktile und damit mechanisch bearbeitbare Bänder hergestellt werden können, da sie wie Glas eine erstarrte Flüssigkeit sind und daher auch als metallische Gläser bezeichnet werden.

Graphit als Tiegelmaterial beim Melt-Spinning-Verfahren ist aus der EP-A 55 827 bzw. Bornitrid als Tiegelmaterial beim Melt-Spinning-Verfahren aus der EP-A 38 584 bekannt.

Durch die Wahl von gut wärmeleitfähigem, hochdichtem Graphit oder Bornitrid wird vermieden, daß der Tiegel vom flüssigen Aktivlot benetzt wird und es dazu kommt, daß beim Auspressen des Aktivlots durch die Tiegelöffnung hindurch Schmelze nicht nur auf der Metalltrommel wie gewünscht bandförmig erstarrt, sondern auch aufgrund der Benetzungsfähigkeit auf die anderen Teile der Tiegelöffnung gelangt und dort wegen der schlechten Wärmeleitfähigkeit der bisherigen Tiegel erstarrt. Diese dort erstarrten Teile der Schmelze würden dazu führen, daß das Aktivlotband zerfasert oder sogar zerreißt.

Die erwähnten hervorragenden Eigenschaften des ternären Aktivlots werden durch dessen Reaktion mit der Keramik erreicht und zeigen sich besonders bei einem Drucksensor gemäß Anspruch 10 mit einem Grundkörper und einer Membran aus Keramik, insbesondere aus Aluminiumoxid-Keramik, vorzugsweise mit einer Reinheit von 96 Gew%, die unter Bildung einer Kammer in einem definierten Abstand parallel zueinander an ihrem Rande mittels des Aktivlots, z.B. mittels eines Formteils daraus, thermisch zusammengefügt sind.

Derartige, z.B. resistive oder kapazitive, Drucksensoren sind typische verspannungsempfindliche Bauteile; sie dürfen in einem Temperaturbereich von z.B. -40 °C bis +130 °C keine oder allenfalls eine vernachlässigbare Temperaturhysterese elektrischer Kennwerte haben. Liegen die thermischen Ausdehnungskoeffizienten der Keramik und des Aktivlots nicht ausreichend nahe beieinander, so wird das Aktivlot während des Betriebs im erwähnten Temperaturbereich plastisch und daher irreversibel verformt, und es kann sogar bereichsweise zum Ausbrechen oder Abreißen der Keramik kommen. Die räumliche Zuordnung der Sensorteile geht dadurch in eine zwar nur geringfügig, aber doch andere Zuordnung über. Diese neue Konfiguration hat aber andere elektrische Kennwerte zur Folge. Da diese den Meßeffekt, z.B. einen zu messenden Druck, repräsentieren, hat der Sensor nun eine (unerwünschte) Temperaturhysterese.

Das Aktivlot muß zur Vermeidung dieser Temperaturhysterese also einen Temperaturausdehnungskoeffizienten haben, der idealerweise gleich dem der Keramik oder des Einkristalls ist, realerweise also letzterem möglichst nahekommt.

Bei den genannten Drucksensoren kann die hohe statische Festigkeit und Dauerwechsellastfestigkeit des Zirconium/Nickel/Titan-Aktivlots ohne weiteres nachgewiesen werden: Im Kriechversuch bei höheren Temperaturen, z.B. 130 °C, und unter Nenndruck bzw. bei Überlastdruckstoßversuchen ergeben sich keine Veränderungen der Sensordaten über lange Versuchszeiten.

Die Erfindung und deren weitere Eigenschaften werden nun anhand der Figuren der Zeichnung näher erläutert, in der als bevorzugtes Ausführungsbeispiel für die Anwendung des ternären Aktiv-lots der Aufbau eines kapazitiven Drucksensors und Teile eines bevorzugten Ausführungsbeispiels des Verfahrens zur Herstellung des Aktivlotbandes gezeigt sind.
- Fig. 1 zeigt: eine Draufsicht auf einen solchen Drucksensor,
- Fig. 2 zeigt: eine Schnittansicht des Drucksensors von Fig. 1 entlang von deren Linie II-II,
- Fig. 3: zeigt schematisch das Prinzip einer Vorrichtung zur Durchführung des Melt-Spinning-Verfahrens, und
- Fig. 4: zeigt schematisch den Aufbau eines zweiteiligen Tiegels.

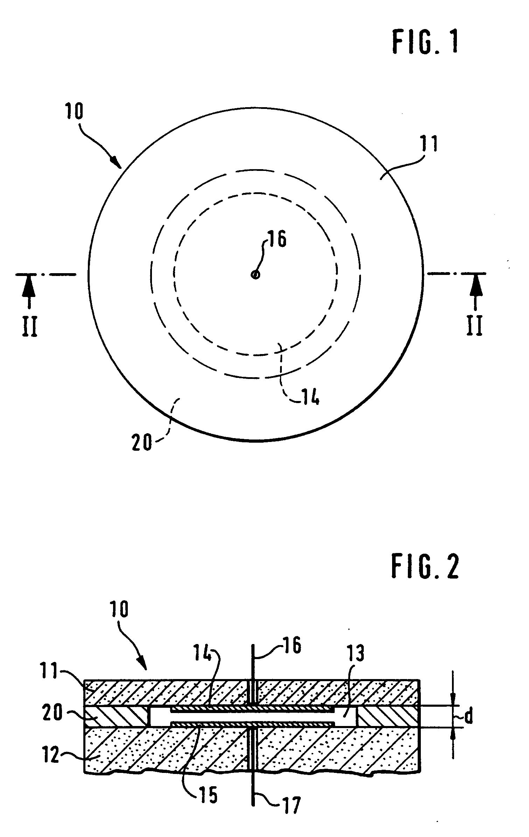

Der in Fig. 1 und 2 dargestellte kapazitive Drucksensor 10 hat eine Membran 11 in der Form einer kreisrunden Scheibe mit planparallelen Flächen, die rings um den Umfang mit einem kreisrunden Grundkörper 12 in einem definierten Abstand d zusammengefügt sind, so daß zwischen der ebenen Oberseite des Grundkörpers 12 und der gegenüberliegenden Seite der Membran 11 eine Kammer 13 gebildet ist. Die Membran 11 und der Grundkörper 12 bestehen aus Keramik, z.B. aus Aluminiumoxid-Keramik, vorzugsweise mit einer Reinheit von 96 Gew.%. Die Membran 11 ist elastisch, so daß sie sich unter einem auf sie einwirkenden Druck verformen kann, wodurch sie sich nach der einen oder der anderen Seite durchbiegt. Der Grundkörper 12 kann massiv und starr sein; er kann aber bei Bedarf auch wie die Membran 11 als flache elastische Scheibe ausgebildet sein.

An den einander zugewandten Flächen von Membran 11 und Grundkörper 12 sind innerhalb der Kammer 13 kreisförmige Leiterschichten 14, 15 aus einem geeigneten Metall, z.B. Tantal, angebracht, die sich mit Abstand gegenüberliegen. Mit der Leiterschicht 14 ist ein Anschlußleiter 16 verbunden, der gasdicht, z.B. in Form eines eingelösteten aktivlotumhüllten Drahtes, durch die Membran 11 hindurchgeführt ist. In gleicher Weise ist mit der Leiterschicht 15 ein Anschlußleiter 17 verbunden, der ebenfalls gasdicht nach außen geführt ist.

Die Leiterschichten 14, 15 bilden die Elektroden eines Kondensators, dessen Kapazität vom Abstand der Leiterschichten abhäng, so daß sie sich bei Abstandsänderungen infolge von Druckeinwirkungen ebenfalls ändert. Die Kapazität des Sensors kann mit einer an die Anschlußleiter 16, 17 angeschlossenen elektronischen Schaltung gemessen werden und ist ein Maß für den auf den Sensor einwirkenden Druck.

Der Vollständigkeit halber sei erwähnt, daß es auch Sensoren mit mehr als zwei Elektroden gibt. So kann z.B. eine der beiden Flächen zwei konzentrische Elektroden tragen, die zusammen mit der gemeisamen gegenüberliegenden Elektrode zwei Kondensatoren mit einer gemeinsam Elektrode bilden, die z.B. als Meß- bzw. als Referenzkondensator verwendet werden können.

Die Besonderheit des dargestellten Drucksensors besteht in der Art und Weise, wie Membran 11 und Grundkörper 12 am Rande zusammengefügt sind. Sie sind dort mittels eines vorgefertigten Formteils 20 aus einem der erfindungsgemäßen Aktivlote, z.B. aus einer eutektikumsnahen oder der eutektischen Zirconium/Nickel-Legierung plus Titan, miteinander gasdicht verlötet, ohne daß dabei die jeweiligen Flächen von Membran 11 und Grundkörper 12 vorher metallisiert zu werden bräuchten oder ein Flußmittel angewendet werden müßte. Dabei bestimmt die Dicke des Formteils 20 den Abstand zwischen Membran 11 und Grundkörper 12.

Das Formteil 20 ist z.B. ein Ring, der aus einem mittels des Melt-Spinning-Verfahrens oder mittels der sogennanten spray deposition, gegebenenfalls unter Schutzgas, hergestellten Aktivlot-Folienband mit amorpher oder mikrokristalliner Struktur, z.B. durch Stanzen, gewonnen wird. In diesen Folien sind die einzelnen Elemente des Aktivlots sehr homogen und fein verteilt, was für eine zuverlässige Fügung besonders wichtig ist. Andererseits lassen sich solche Ringe mittels des Melt-Spinning-Verfahrens auch durch Formspritzen oder Radialspritzen direkt aus der Schmelze herstellen.

Anstatt des genannten Formteils kann das Aktivlot aber auch pastenförmig auf die zu verlötenden Teile aufgebracht werden, wobei die Paste aus einem ebenfalls in amorpher oder mikrokristalliner Form vorliegenden Aktivlot-Pulver und aus einem geeigneten organischen Bindemittel besteht.

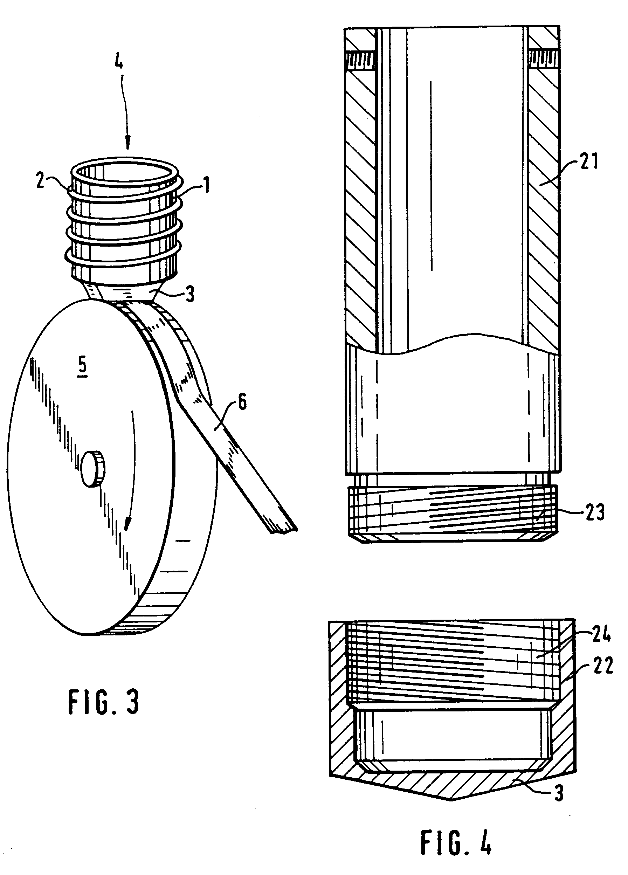

In Fig. 3 sind die zum Verständnis des Melt-Spinning-Verfahrens wesentlichen Teile schematisch und perspektivisch gezeigt. Ein vollständig aus einem hochwärmebeständigen und gut wärmeleitfähigen, nicht-metallischen Material bestehender, bevorzugt zylindrischer, Tiegel 1 mit vorzugsweise konstanter Wandstärke wird, z.B. mittels Hochfrequenzenergie, aufgeheizt, wozu eine Spule 2 dient. Der Tiegel 1 ist zweckmäßigerweise mit einer an dessen Bodenfläche vorstehenden, bevorzugt mittig darin angeordneten, Tiegelöffnung 3 versehen. Diese ist zweckmäßiger-weise senkrecht über einer Metalltrommel 5 in Verlängerung ihres Durchmessers angeordnet. Der Tiegel 1 besteht aus hochdichtem Graphit oder aus Bornitrid.

Durch zeitweises Einwirkenlassen eines Druckes 4 auf das im Tiegel 1 geschmolzene Aktivlot-Legierungsmaterial wird dieses durch die Tiegelöffnung 4 auf die Mantelfläche der rotierenden Metalltrommel 5 ausgepreßt und erstarrt dort sehr schnell zu dem gewünschten Band 6 in gleichmäßiger Dicke und mit zwei glatten Oberflächen, da durch die gute Wärmeleitfähigkeit des (Graphit-) Tiegels 1 verhindert wird, daß es trotz allfälliger Benetzung um die Tiegelöffnung 3 herum zur Erstarrung von Schmelze kommt.

Die Metalltrommel 5 rotiert mit hoher Umfangsgeschwindigkeit und hat eine hohe Wärmeleitfähigkeit. Dies wird z.B. dadurch erreicht, daß sie vollständig aus Kupfer besteht oder daß ihre Umfangsfläche zweckmäßigerweise mit Kupfer belegt ist. Auch kann sie von innen mit einer Kühlflüssigkeit, z.B. Wasser, gekühlt sein. Durch diese Ausbildung der Metalltrommel 5 lassen sich Abkühlgeschwindigkeiten der flüssigen Legierung in der Größenordnung von 10³ bis 10⁶ °C/s erreichen.

In Fig. 4 ist schematisch eine bei dem beanspruchten Verfahren eingesetzte Variante des Tiegels gezeigt. Er ist zweiteilig und besteht somit aus einem Oberteil 21 und einem Unterteil 22. Das Oberteil 21 ist mittels eines Gewindes 23 in ein entsprechend passendes Gewinde 24 der Unterteils 22 einschraubbar. Somit kann das Unterteil 22, wenn es unbrauchbar geworden ist, vernichtet werden, während das Oberteil 21 weiterverwendet werden kann. Diese Variante spart somit Herstellungskosten. Dabei ist das Volumen des Unterteils 22 so zu dimensionieren, daß die Gesamtmenge der Schmelze soviel Platz hat, daß in die Gewinde 23, 24 keine Schmelze eindrigen kann.

## Patentansprüche

1. Ternäres Aktivlot aus 70 Atom% bis 85 Atom% einer Zirconium/Nickel-Legierung, die aus 70 Atom% bis 85 Atom% Zirconium und 15 Atom% bis 30 Atom% Nickel besteht, und aus 15 Atom% bis 30 Atom% Titan, vorzugsweise zum Verlöten von ((Aluminium-)Oxid)Keramikteilen oder Einkristallen oder Metallteilen jeweils untereinander oder von ((Aluminium-) Oxid)Keramikteilen mit Einkristallen oder von ((Aluminium-) Oxid)Keramikteilen bzw. Einkristallen mit Metallteilen.

2. Ternäres Aktivlot nach Anspruch 1, bei der die Zirconium/Nickel-Legierung eine Zusammensetzung in einem Bereich von ± 5 Atom% um die eutektische Zusammensetzung (= 24 Atom% Nickel, 76 Atom% Zirconium) hat.

3. Ternäres Aktivlot nach Anspruch 2, bei der die Zirconium/Nickel-Legierung die eutektische Zusammensetzung (= 24 Atom% Nickel, 76 Atom% Zirconium) hat.

4. Verfahren zum Herstellen eines gleichmäßig dicken und zwei möglichst glatte Oberflächen aufweisenden Bandes (6) aus einem ternären Aktivlot nach einem der Ansprüche 1 bis 3 mittels des Melt-Spinning-Verfahrens, bei dem das in einem vollständig aus hochwärmebeständigem, gut wärmeleitfähigem hochdichtem Graphit oder aus hochwärmebeständigem, gut wärmeleitfähigem Bornitrid bestehenden zylindrischen Tiegel (1), z.B. mittels Hochfrequenzenergie, schmelzflüssig gemachte ternäre Aktivlot durch eine in dessen Bodenfläche angeordnete Tiegelöffnung (3) hindurch auf eine mit hoher Umfangsgeschwindigkeit rotierende Metalltrommel (5) hoher Wärmeleitfähigkeit ausgepreßt wird, auf der das flüssige Aktivlot mit einer Abkühlgeschwindigkeit in der Größenordnung von 10³ bis 10⁶ °C/s erstarrt.

5. Verfahren nach Anspruch 4, bei dem der Tiegel (1) zweiteilig aus einem Oberteil (21) und einem Unterteil (22) besteht.

6. Verfahren nach Anspruch 5, bei dem der Tiegel (1; 21, 22) eine konstante Wandstärke hat.

7. Verfahren nach einem der Ansprüche 4 bis 6, bei dem die Tiegelöffnung (3) mittig in der Bodenfläche des Tiegels (1; 22) angeordnet ist und aus dieser hervorsteht.

8. Verfahren nach einem der Ansprüche 5 bis 7, bei dem Ober- und Unterteil (21, 22) mittels passender Gewinde (23, 24) ineinander verschraubt sind und die Menge des zu schmelzenden Aktivlots allein vom Hohlraum des Unterteils (22) aufgenommen wird.

9. Verfahren nach einem der Ansprüche 4 bis 8, bei dem die Tiegelöffnung (3) senkrecht über der Metalltrommel (5) in Verlängerung ihres Durchmessers angeordnet ist.

10. Drucksensor (10) mit einem Grundkörper (12) und einer Membran (11) aus Keramik, insbesondere Aluminiumoxid-Keramik, vorzugsweise mit einer Reinheit von 96 Gew.%, die unter Bildung einer Kammer (13) in einem definierten Abstand (d) parallel zueinander an ihrem Rande mittels eines Aktivlots nach einem der Ansprüche 1 bis 3 thermisch zusammengefügt sind.

## Claims

1. A ternary active brazing material consisting of 70 atom% to 85 atom% of a zirconium-nickel alloy and 15 atom% to 30 atom% titanium, with the zirconium-nickel alloy composed of 70 atom% to 85 atom% zirconium and 15 atom% to 30 atom% nickel, preferably for brazing ((aluminum-)oxide-)ceramic parts or single crystals or metal parts or for brazing ((aluminum-)oxide-)ceramic parts to single crystals or ((aluminum-)oxide-)ceramic parts or single crystals to metal parts.

2. A ternary active brazing material as claimed in claim 1 wherein the zirconium-nickel alloy has a composition in a range of ±5 atom% around the eutectic composition (= 24 atom% nickel, 76 atom% zirconium).

3. A ternary active brazing material as claimed in claim 2, wherein the zirconium-nickel alloy has the eutectic composition (= 24 atom% nickel, 76 atom% zirconium).

4. A method of fabricating a ribbon (6) of uniform thickness and having two optimally smooth surfaces from a ternary active brazing material as claimed in any one of claims 1 to 3 by melt spinning, wherein the ternary active brazing material, after being melted, e.g., by high-frequency heating, in a cylindrical crucible (1) made completely of high-temperature-resistant, highly thermally conductive high-density graphite or of high-temperature-resistant, highly thermally conductive boron nitride, is forced through an opening (3) in the bottom of the crucible onto a metal drum (5) of high thermal conductivity rotating at a high circumferential speed, on which the liquid active brazing material solidifies at a cooling rate on the order of 10³ to 10⁶C°/s.

5. A method as claimed in claim 4 wherein the crucible (1) consists of two parts, an upper part (21) and a lower part (22).

6. A method as claimed in claim 5 wherein the crucible (1; 21, 22) has a constant wall thickness.

7. A method as claimed in any one of claims 4 to 6 wherein the opening (3) of the crucible (1; 22) is located at the center of the bottom of the crucible (1; 22) and projects from the bottom surface.

8. A method as claimed in any one of claims 5 to 7 wherein the upper and lower parts (21, 22) are screwed together by means of suitable threads (23, 24), and wherein the quantity of active brazing material to be melted is received solely by the hollow space of the lower part (22).

9. A method as claimed in any one of claims 4 to 8 wherein the opening (3) of the crucible is located vertically above the metal drum (5) in the prolongation of the diameter of the drum.

10. A pressure sensor (10) comprising a substrate (12) and a diaphragm (11) of ceramic, particularly alumina ceramic, preferably with a purity of 96 wt.%, which are thermally joined together around the periphery at a defined distance (d) from and parallel to each other by means of an active brazing material as claimed in any one of claims 1 to 3, forming a chamber (13).

## Revendications

1. Alliage ternaire actif de métal d'apport de brasage composé de 70 à 85% d'atomes de zirconium et de nickel, cet alliage comprenant 70 à 85% d'atomes de zirconium et de 15 à 30% d'atomes de nickel ainsi que 15 à 30% de titane et étant destiné de préférence au brasage de pièces céramiques (d'oxyde d'aluminium) ou de monocristaux ou encore de pièces métalliques entre eux ou au brasage de pièces céramiques (d'oxyde d'aluminium) et de monocristaux ou de pièces céramiques (d'oxyde d'aluminium) respectivement de monocristaux et de pièces métalliques.

2. Alliage ternaire actif selon la revendication 1 dans le cas duquel l'alliage de zirconium et de nickel présente une composition située dans une zone à environ 5% d'atomes autour de l'eutectique (= 24% d'atomes de nickel, 76% d'atomes de zirconium).

3. Alliage ternaire actif selon la revendication 2 dans le cas duquel l'alliage de zirconium et de nickel présente une composition eutectique (= 24% d'atomes de nickel, 76% d'atomes de zirconium).

4. Procédé de fabrication d'une bande (6) d'épaisseur régulière et présentant deux surfaces les plus lisses possible à partir d'un alliage ternaire actif de métal d'apport de brasage selon l'une ou l'autre des revendications 1 à 3, grâce au procédé de filature en fusion dans le cas duquel l'alliage ternaire actif de métal d'apport de brasage mis en fusion, par exemple au moyen d'énergie haute-fréquence dans un creuset cylindrique (1) composé entièrement de graphite résistant à la chaleur, bon conducteur et à densité élevée ou de nitrure de bore résistant à la chaleur et bon conducteur, est sorti sous pression par une ouverture (63) du creuset prévue au fond du creuset et est déposé sur un tambour métallique (5) de conductibilité thermique élevée et tournant à une vitesse circonférentielle élevée, sur lequel l'alliage actif liquéfié se solidifie selon une vitesse de refroidissement comprise entre 10³ et 10⁶ °C/s.

5. Procédé selon la revendication 4 dans le cas duquel le creuset (1) se compose d'une partie supérieure (21) et d'une partie inférieure (22).

6. Procédé selon la revendication 5, dans le cas duquel le creuset (1; 21, 22) présente une épaisseur de paroi constante.

7. Procédé selon l'une ou l'autre des revendications 4 à 6, dans le cas duquel l'ouverture (3) du creuset est prévue au centre du fond du creuset (1; 22) et fait saillie hors de celui-ci.

8. Procédé selon l'une ou l'autre des revendications 5 à 7, dans le cas duquel la partie supérieure et la partie inférieure (21, 22) sont vissées l'une dans l'autre au moyen de filets adéquats (23, 24), la quantité d'alliage actif devant être liquéfié étant recueillie uniquement par la cavité de la partie inférieure (22).

9. Procédé selon l'une ou l'autre des revendications 4 à 8, dans le cas duquel l'ouverture du creuset (3) est prévue perpendiculairement au-dessus du tambour métallique (5) dans le prolongement de son diamètre.

10. Détecteur de pression (10) composé d'un corps de base (12) et d'une membrane (11) en céramique, et plus particulièrement en céramique d'oxyde d'aluminium dont le degré de pureté atteint de préférence 96% du poids, ce corps de base et cette membrane situés à une distance définie et parallèlement étant utilisés pour la construction d'une chambre et étant réunis par un procédé thermique par leur bord au moyen d'un alliage actif d'apport de brasage conforme à l'une ou l'autre des revendications 1 à 3.
